# EUROPEAN PATENT APPLICATION

(11) **EP 3 992 938 A1**
(43) Date of publication of application: **04.05.2022**
(21) Application number: 20382936.1
(22) Date of filing: 28.10.2020
(51) Int. Cl.: G08G 1/005, G08G 1/08, G08G 1/095, G08G 1/01, G08G 1/052, G06N 3/02

(54) **INTELLIGENT AND ACCESIBLE TRAFFIC LIGHT CONTROL DEVICE AND METHOD**

(71) Applicant: Colás Pasamontes, José, 28224 Pozuelo de Alarcón (Madrid) (ES); Daganzo Ortiz, Enrique, 28023 Madrid (ES); Pérez Fernández, Alfonso, 01006 Vitoria-Gasteiz (ES)
(72) Inventor: COLÁS PASAMONTES, José, 28224 Pozuelo de Alarcón (Madrid) (ES)
(74) Representative: Pons

(57) **Abstract**

A traffic light control device which comprises a central processing unit (CPU), a detection sensor, connected to the CPU for detecting vehicles and/or pedestrians surrounding the traffic light, and a deep neural processing module, connected to the detections sensor for analyzing the data obtained, and a power source for supplying power; and a method which comprises the steps of when the traffic light is red for pedestrians detecting a number of pedestrians and modifying the time for changing to green light for pedestrians, and when the traffic light is red for vehicles detecting a number of vehicles and modifying the time for changing to green light for vehicles.

## Description

### OBJECT OF THE INVENTION

The present invention is related to the field of traffic lights, and more particularly to the control of traffic lights and acoustic alarms incorporated to them.

An object of the present invention is a control method for controlling a traffic light and an acoustic alarm installed on said traffic light. The control method allowing to control the traffic light according to an air contamination level and the traffic of vehicles and pedestrians, and also allowing to activate the traffic light acoustic alarm when a pedestrian with visual deficiencies request it.

Another object of the present invention is a controller for the traffic light and for the acoustic alarm in an on-demand way.

It is therefore the object of the invention an intelligent and accessible traffic light control device and a method to controlling the traffic and to serve all pedestrians, and more specifically to disabled people.

### BACKGROUND OF THE INVENTION

The traffic light is a very common signaling device used to control the traffic. A traffic light from the state of the art is ruled by time, that is, the traffic light changes the color according to a predetermined time. Therefore, it is possible to set a green light time, and a red light time. However, it is not possible to adapt the time according to the traffic (of vehicles and pedestrians) in real-time.

Also, a large number of traffic lights comprise an acoustic alarm for indicating pedestrians having visual deficiencies that the green light is on. Nevertheless, this acoustic alarm is activated by defect, when the light of a traffic light becomes green, the acoustic alarm is activated. This solution leads to some problems relating to the waste of energy when activating an alarm not needed if there is not any pedestrian with visual deficiencies, also the discomfort created in buildings and stores near to the traffic light for making noise when it is not needed.

In a way of implementing a first approach of an on-demand solution for requesting the activation of the green light by pedestrians, a button has been included in some traffic lights. Therefore, when a pedestrian is waiting for the green light, he pulses the button and the time for activating green light is reduced.

### DESCRIPTION OF THE INVENTION

The invention refers to a traffic light controller device which provides a simple and economic way of controlling the traffic light. The controller of the invention allows to detect pedestrians and is manufactured as a modular solution, having as much units as needed.

The traffic light controller comprises a case which houses a central processing unit (CPU) for controlling the traffic light, a detection sensor, connected to the CPU for obtaining data from vehicles or pedestrians surrounding the traffic light, a deep neural processing module, connected to the detection sensor for receiving and analyzing data from vehicles and/or pedestrians surrounding the traffic light, and a power source for supplying power to all the modules of the intelligent and accesible traffic light control device.

The CPU is configured to modify the time for changing lights of the traffic light according to the number of vehicles and/or pedestrians surrounding the traffic light.

The traffic light controller could also comprise connected to the CPU:
- At least one contamination sensor for measuring air contamination.
- At least one fog or dust sensor for measuring fog or airborne dust.
- One or more signalization bands mounted on pedestrian crossings.

Preferably, the detection sensor could be a set of cameras connected to the CPU comprising at least a color and an IR camera. In this case, the controller also comprises at least one brightness sensor connected to the CPU for measuring brightness.

The traffic light controller could also comprise a connectivity unit for sending and receiving data from external sources. Particularly, the connectivity unit is intended to be connected to pedestrian emitters. The controller further comprises a control alarm mounted in the traffic light and a relay control module connected and managed by the CPU for controlling the power supply to the acoustic alarm in view of the pedestrian emitters detected.

Regarding the power source, the traffic light receives two different AC voltages for the red and green light. This voltages could be used for controlling and providing information. Also, using the power source of the traffic light for the controller, implies a reduction in costs, and a battery could be included and charged by using said power source for emergency situations.

The pedestrian emitters could preferably be a smartband or an app in the mobile phone. In a preferred way, the controller and the emitter are connected by using radio frequency, and more particularly Bluetooth Low Energy (BLE), being this technology trustfully and having a low range in scope. The emitter is preferably simple and cheap, in this way, preferably it is auto-configurable, no manual linkage is needed, and has a reduced power consumption.

The controller of the invention could also comprise a set of sensors connected to the CPU for monitoring temperature and humidity and a fan for controlling the temperature and humidity inside the case.

Also an emergency power module (UPS) having a LiPo battery could be added to the controller of the invention.

The acoustic alarm could be attached to an existing traffic light in a discrete and simple way. Also, it could be configured to allowing a former controller to continue functioning normally when the controller of the invention is deactivated or is broken.

The controller is designed so as to allow an easy and economic maintenance.

Also, the controller of the invention could comprise a connectivity module, for providing access points for connecting Internet by using high-range radio networks having a reduced broadband, low cost and high standardization, as, for example, LoRaWAN.

The invention also refers to a traffic light control method which allows to control the changing time of a traffic light.

The control method comprises the steps of:
- providing at least one detection sensor adapted to detect pedestrians and/or vehicles surrounding the traffic light,
- when the traffic light is red for pedestrians and green for vehicles:
   ∘ detecting a number of pedestrians surrounding the traffic light by using the detection sensor,
   ∘ modifying, by means of a central processing unit (CPU) (1) connected to the detection sensor, the time for changing to green light for pedestrians according to the number of pedestrians surrounding the traffic light,

- when the traffic light is red for vehicles and green for pedestrians:
   ∘ detecting a number of vehicles surrounding the traffic light by using the detection sensor,
   ∘ modifying, by means of the CPU (1) connected to the detection sensor, the time for changing to green light for vehicles according to the number of vehicles surrounding the traffic light.

The control method could also comprise the steps of:
- providing at least one contamination sensor adapted for measuring air contamination connected to the CPU,
- determining a level of air contamination by using the at least one contamination sensor,
- modifying, by means of the CPU (1) connected to the contamination sensor, the time for changing to from red light to green light for vehicles according to the level of air contamination.

Also, it is possible to include the step of determining, a traffic condition when the traffic light is green for vehicles, by using the detection sensor and the CPU (1), which is adapted for detecting, tracking and calculating velocity of vehicles.

Preferably, the method could also comprise the steps of providing at least one fog or dust sensor, detecting fog and/or airborne dust and applying, by means of the CPU (1), correcting algorithms for enhancing quality of the captured images.

The method also could preferably comprise the steps of detecting blur, by means of the CPU (1), and reporting to a user or applying correcting algorithms for enhancing quality of the captured images.

In some cases the detection sensor could consist on a set of cameras connected to the CPU (1), comprising at least a color and an IR camera. In this case, the control method could also comprise the steps of providing at least one brightness sensor connected to the CPU (1), detecting brightness by using the brightness sensor; and:
∘ if the brightness is fewer than a threshold selecting, by means of the CPU (1), IR camera and
∘ if the brightness is higher than said threshold selecting color camera, by means of the CPU (1).

The control method could comprise the steps of providing signalization bands, connected to the CPU (1), mounted on pedestrian crossings and activating, by means of the CPU (1), said signalization bands when the traffic light is red for vehicles.

The method of the invention could further comprise the steps of providing an acoustic alarm mounted in the traffic light and detecting Bluetooth devices surrounding the traffic light in a limited detecting range, when the traffic light is red for pedestrians. On detecting Bluetooth devices, the method could comprise the steps of searching valid identification codes from Bluetooth devices, and determining, by means of a central processing unit (CPU) (1), if the number of valid identification codes obtained is greater than a threshold, so that:
∘ if it is greater, activate the acoustic alarm when the traffic light becomes green for pedestrians,
∘ if it is lower, maintain deactivated the acoustic alarm when the traffic light becomes green for pedestrians.

The method, in this case, allows to activate the acoustic alarm when the traffic light is green for pedestrians only when at least a pedestrian having vision problems are near the traffic light. For that, the pedestrian needs to carry an emitter for being detected by the CPU of the traffic light controller.

Preferably, the control method comprise also a step of activating an acoustic alarm controller which activates the acoustic alarm always when the traffic light is green. This feature allows to provide an acoustic alarm when the controller of the invention is not functioning

Additionally the traffic light acoustic alarm control method of the invention could comprise the steps of determining the temperature of the CPU for avoiding damages from overheating, determining the amount of resources of the CPU consumed, determining the temperature and humidity inside a case containing the controller, sending and/or receiving a message by using a connectivity unit and connecting or disconnecting internet resources by using the connectivity unit.

In case that the temperature or humidity exceeds normal values, the method of the invention could comprise the step of activating and regulating a fan for controlling temperature and humidity inside the case.

Preferably, it could be created a HTTP/HTTPS, Websocket, FTP/FTPS or MQTT client for sending data from sensors or from the acoustic alarm.

The control method of the invention could also comprise the steps of connecting the controller to an external server or computer for remote activations, deactivation or updating, using an Over-the-Air (OTA) protocol, for example using a OVA updating manager such as Mender^{®}. Also, the controller could send updated information about its performance to the external server. The controller of the invention, as well as the method defined, allows an intelligent management of traffic lights and acoustic alarms. The invention could also be implemented for detecting obstacles in a pedestrian crossing and for creating a connectivity network, preferably a LoRa, thus allowing the connection between Internet-of-things (loT) devices and external servers acting as control centers, this application allows to control humidity, temperature, UV radiation and pollution, also to control irrigation of parks and gardens and traffic of vehicles and pedestrians.

The invention defined allows to control traffic light acoustic alarms in a cost effective way, maintain a cheap and simple maintenance. Also, the invention allows an installation of more modules and units in a simple way.

Furthermore, and regarding security the device includes a hardware module to encrypt information stored in a non-volatile memory and the device also detects when the case is opened without permission, producing an alarm and deleting sensible information. So, a permanent protection of programs (applications), data and communications for a solution which will be installed outdoor without surveillance.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a plain view of a preferred embodiment of the controller for traffic light of the invention.
Figure 2.- Shows a side view of a preferred embodiment of the controller for traffic light of the invention.
Figure 3.- Shows a schematic view of a preferred embodiment of the controller for traffic light acoustic alarm of the invention, mounted on a traffic light.

### PREFERRED EMBODIMENTS OF THE INVENTION

The present invention is directed to a traffic light acoustic alarm controller (13) and method which allow to activate the acoustic alarm in an on-demand way for pedestrians having visual deficiencies.

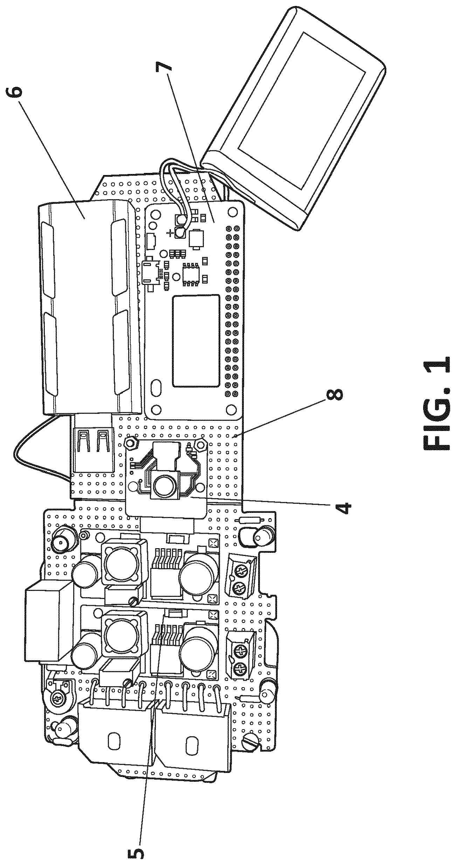

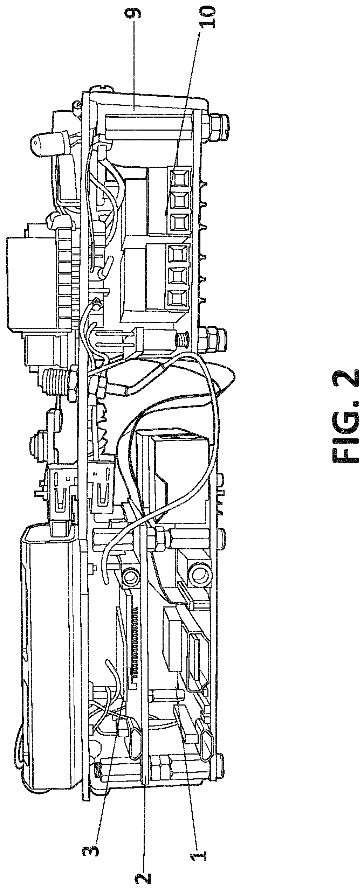

Figures 1 and 2 show an embodiment of the controller (13) of the invention, which comprises a Single Board Computer (SBC) (1) multi-core mounted on a motherboard (8), which connects to multiple units by reducing the use of wires. The SBC (1) is a low cost solution for projects of any type, comprising USB ports and being connectable to digital cameras. The SBC could manage the controller (13) and also an acoustic alarm.

In this case, the SBC (1) comprises a refrigeration unit, comprising a set of fans (2, 9), which generate an airstream to cool down the controller circuits and avoiding damages and could be always activated or could be activated on demand, and aluminum radiators.

The SBC (1) connects with other units and modules by using standard ports. The controller (13) comprising:
- A connectivity unit (3), comprising WiFi, Bluetooth, Bluetooth Low Energy (BLE) and a wide-band or narrow-band mobile internet connection, for sending and receiving data from external sources, in particular Internet of Things (loT) devices or external informatics services for remote updating and configuration. The mobile internet connection could use different communication protocols such as: HTTP, HTTPS, FTP, FTPS, Websockets, TCP/UDP, SNMP, MQTT, CoAP... The connectivity unit (3) could also comprise a GPS receiver for determining the location of the controller (13).
- A high-resolution camera (4), a standard camera (4) or a combination of more than one camera (4). In a preferred embodiment, one or more miniature cameras for low brightness are used for capturing, in real time, images of traffic of vehicles and number of pedestrians waiting in a traffic light.
- A power source (5) which reduces the voltage of the AC power given to the traffic light (40V during the day, and 25V at night) to a voltage for feeding modules and units (5V, 4 Amperes maximum). Also, the power source is configured to send an interruption signal to the SBC (1) when the green light for pedestrians is activated for synchronizing said SBC (1) with the traffic light. In a preferred embodiment, the power source could give power to the controller (13) and to the acoustic alarm.
- A UPS (7) unit having a LiPo battery which is connected to the traffic light power source, and adapted to provide information about the charge level and the voltage provided, thus, allowing to detect voltage drops in the traffic light power source (5), activating an alarm and providing power to the units of the controller for a controlled shutting off. Also, the SBC (1) computer could be protected by switching it off for avoiding damages. In a preferred embodiment solar panels could be used. The UPS (7) unit also comprises a real time clock (RTC) for carrying out software tasks in a real time.
- A relay control module (10) for controlling the power supply given to an acoustic alarm connected and managed by the controller according to the signal received from the SBC (1). The pedestrians having visual deficiencies have an emitter for being detected by the SBC (1), using BLE connectivity. Preferably, in this case an emitter band having an authorized iBeacon code is used. On detecting said emitter, the SBC (1) send instructions to the relay control module (10) for switching on the acoustic alarm when the traffic light becomes green, and otherwise, if any emitter is detected, the acoustic alarm is not activated. Also, if the controller (13) is not functioning properly, the relay control module (10) is configured for activating the acoustic alarm always when the traffic light is green. In one embodiment, wherein the controller (13) comprises signalization bands, the relay control module (10) also controls the power supply of said signalization bands.
- A set of sensors (11) configured for determining the temperature and humidity of the controller (13), which is protected by a case. The sensors (11) being connected to the SBC (1) for sending the temperature and humidity data.

In a preferred embodiment, a Real Time Deep Neural Network (DNN) (6) processing module is included. The DNN processing module (6) is configured for detection and classification tasks of video data in a real time, by using convolutional neural networks (CNN). The DNN processing module (6) receives video data from the camera (4) connected to the SBC (1), analyzes said data, by using segmentation, tagging, detecting, counting and tracking algorithms, and gives textual information for being sent to the SBC (1). The DNN processing module (6) is intended for recognition of vehicles, people, faces, heads, shoulders...

In another embodiment, a LoRa module is included for sending and receiving information, working on authorized frequency range. The LoRa module comprises one or more channels for being connected to multiple devices at the same time. The LoRa network generated by a plurality of these modules along with an internet mobile network allows to connect each traffic light controller (13) to an external control server.

In a particular embodiment, also WiFi access points could be configured in pedestrian devices for creating a complex network which allows for example the development of autonomous cars.

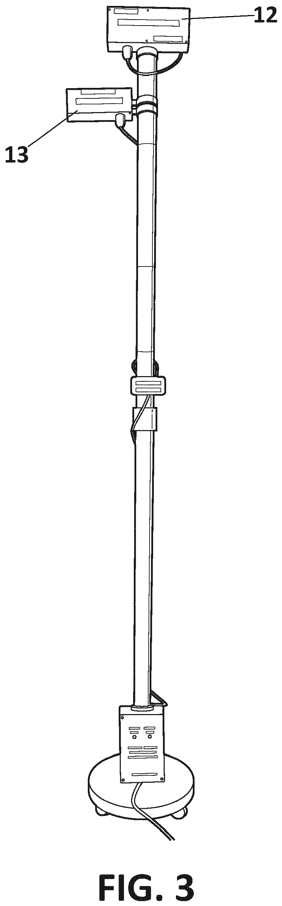

Figure 3 shows the controller (13) of the invention mounted along with a former controller (12), which only controls the acoustic alarm and does not comprise artificial intelligence. The former controller (12) turns on the acoustic alarm always when the traffic light is green for pedestrians. The former controller (12) could be connected with the controller (13) of the invention.

## Claims

1. A traffic light control method which comprises the steps of:
- providing at least one detection sensor adapted to detect pedestrians and/or vehicles surrounding the traffic light,
- when the traffic light is red for pedestrians and green for vehicles:
∘ detecting a number of pedestrians surrounding the traffic light by using the detection sensor,
∘ modifying, by means of a central processing unit (CPU) (1) connected to the detection sensor, the time for changing to green light for pedestrians according to the number of pedestrians surrounding the traffic light,
- when the traffic light is red for vehicles and green for pedestrians:
∘ detecting a number of vehicles surrounding the traffic light by using the detection sensor,
∘ modifying, by means of the CPU (1) connected to the detection sensor, the time for changing to green light for vehicles according to the number of vehicles surrounding the traffic light.

2. The control method according to claim 1, further comprising the steps of:
- providing at least one contamination sensor adapted for measuring air contamination connected to the CPU,
- determining a level of air contamination by using the at least one contamination sensor,
- modifying, by means of the CPU (1) connected to the contamination sensor, the time for changing to from red light to green light for vehicles according to the level of air contamination.

3. The control method according to any of previous claims, further comprising the step of determining, a traffic condition when the traffic light is green for vehicles, by using the detection sensor and the CPU (1), which is adapted for detecting, tracking and calculating velocity of vehicles.

4. The control method according to any of previous claims, further comprising the steps of providing at least one fog or dust sensor, detecting fog and/or airborne dust and applying, by means of the CPU (1), correcting algorithms for enhancing quality of the captured images.

5. The control method according to any of previous claims, further comprising the steps of detecting blur, by means of the CPU (1), and reporting to a user or applying correcting algorithms for enhancing quality of the captured images.

6. The control method according to any of previous claims, wherein the detection sensor comprises a set of cameras connected to the CPU (1) comprising at least a color and an IR camera, the method further comprising the steps of:
- providing at least one brightness sensor connected to the CPU (1),
- detecting brightness by using the brightness sensor; and
∘ if the brightness is fewer than a threshold selecting, by means of the CPU (1), IR camera and
∘ if the brightness is higher than said threshold selecting color camera, by means of the CPU (1).

7. The control method according to any of previous claims, further comprising the step of providing signalization bands, connected to the CPU (1), mounted on pedestrian crossings and activating, by means of the CPU (1), said signalization bands when the traffic light is red for vehicles.

8. The control method according to any of previous claims, further comprising the steps of:
- providing an acoustic alarm mounted in the traffic light
- detecting Bluetooth devices near from the traffic light, when the traffic light is red for pedestrians,
- searching valid identification codes from Bluetooth devices,
- determining, by means of a central processing unit (CPU) (1), if the number of valid identification codes obtained is greater than a threshold,
∘ if it is greater, activate the acoustic alarm when the traffic light becomes green for pedestrians,
∘ if it is lower, maintain deactivated the acoustic alarm when the traffic light becomes green for pedestrians.

9. The control method according to claim 8, further comprising the step of activating the acoustic alarm always when the traffic light is green for pedestrians.

10. The control method according to any of claims 1 to 9, further comprising the step of determining the temperature of the CPU (1) for avoiding damages from overheating.

11. The control method according to any of claims 1 to 10, further comprising the step of determining the amount of resources of the CPU (1) consumed.

12. The control method according to any of claims 1 to 11, further comprising the step of sending and/or receiving a message by using a connectivity unit (3).

13. The control method according to any of claims 1 to 12, further comprising the step of connecting or disconnecting internet resources by using the connectivity unit (3).

14. The control method according to any of claims 1 to 13, further comprising the step of creating a HTTP/HTTPS, Websocket, FTP/FTPS or MQTT client for sending data from sensors (11) or from the acoustic alarm.

15. A traffic light controller (13) comprising inside a case:
- a central processing unit (CPU) (1) for controlling the traffic light,
- a detection sensor (4), connected to the CPU for obtaining data from vehicles or pedestrians surrounding the traffic light,
- a deep neural processing module (6), connected to the detection sensor for receiving and analyzing data from vehicles and/or pedestrians surrounding the traffic light, and
- a power source (5) for supplying power to the units of the acoustic alarm controller; and
wherein the CPU (1) is configured to modify the time for changing lights of the traffic light according to the number of vehicles and/or pedestrians surrounding the traffic light.

16. The traffic light controller (13) according to claim 15, further comprising at least one contamination sensor adapted for measuring air contamination, connected to the CPU.

17. The traffic light controller (13) according to any of claims 15 to 16, further comprising at least one fog or dust sensor adapted for measuring fog or airborne dust, connected to the CPU.

18. The traffic light controller (13) according to any of claims 15 to 17, wherein the detection sensor is a set of cameras connected to the CPU (1) comprising at least a color and an IR camera and further comprising at least one brightness sensor connected to the CPU (1) and adapted for measuring brightness.

19. The traffic light controller (13) according to any of claims 15 to 18, further comprising one or more signalization bands, connected to the CPU (1) and mounted on pedestrian crossings.

20. The traffic light controller (13) according to any of claims 15 to 19, further comprising a connectivity unit (3) for sending and receiving data from external sources.

21. The traffic light controller (13) according to claim 20, wherein the connectivity unit is intended to be connected to pedestrian emitters and the controller further comprising a control alarm mounted in the traffic light and a relay control module (10) connected and managed by the CPU for controlling the power supply to the acoustic alarm in view of the pedestrian emitters detected.

22. The traffic light controller (13) according to any of claims 15 to 21, further comprising a set of sensors (11) connected to the CPU for monitoring temperature and humidity and at least a fan (2, 9) for controlling the temperature and humidity inside the case.

23. The traffic light acoustic alarm controller (13) according to any of claims 15 to 22, further comprising an emergency power module (UPS) (7) having a LiPo battery.

24. The traffic light acoustic alarm controller (13) according to any of claims 15 to 23, wherein the power source (5) is a double power supply adapted to use the red light voltage and the green light voltage for transmitting information.
